(19) Europäisches Patentamt / European Patent Office / Office européen des brevets

(11) **EP 4 219 619 A1**

(12) **EUROPEAN PATENT APPLICATION**
published in accordance with Art. 153(4) EPC

(43) Date of publication:
**02.08.2023 Bulletin 2023/31**

(21) Application number: **21872001.9**

(22) Date of filing: **04.08.2021**

(51) International Patent Classification (IPC):
**C08L 23/14** (2006.01)    **C08L 25/08** (2006.01)
**C08L 53/00** (2006.01)

(52) Cooperative Patent Classification (CPC):
**C08L 23/14; C08L 25/08; C08L 53/00**

(86) International application number:
**PCT/JP2021/028921**

(87) International publication number:
**WO 2022/064869 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.09.2020 JP 2020158729**

(71) Applicant: **MCPP Innovation LLC**
**Tokyo 100-8251 (JP)**

(72) Inventor: **MIZUNO, Tadashi**
**Tokyo 100-8251 (JP)**

(74) Representative: **Hoffmann Eitle**
**Patent- und Rechtsanwälte PartmbB**
**Arabellastraße 30**
**81925 München (DE)**

(54) **THERMOPLASTIC ELASTOMER COMPOSITION AND COMPOSITE MOLDED OBJECT**

(57) A thermoplastic elastomer composition including components (A), (B1), (B2), and (C) below. A composite molded body composed of the thermoplastic elastomer composition. A thermoplastic elastomer composition with which a composite molded body excellent in terms of sliding performance, a fusion bonding capability, and fusion bonding durability can be formed and a composite molded body composed of the thermoplastic elastomer composition can be provided. Component (A): styrene elastomer Component (B1): crystalline polypropylene Component (B2): amorphous polypropylene Component (C): silicone lubricant

Fig. 1

**Description**

Technical Field

The present invention relates to a thermoplastic elastomer composition and a composite molded body.

Background Art

The production of a thermoplastic elastomer composition by melt-kneading of a propylene resin and a styrene-butadiene block copolymer does not require a vulcanization step although the resulting thermoplastic elastomer composition has the properties of a rubber-like soft material. Furthermore, the thermoplastic elastomer composition has workability comparable to that of a thermoplastic resin. Therefore, attentions have been focused on thermoplastic elastomer compositions in terms of rationalization of production process, recycling efficiency, and the like, and the thermoplastic elastomer compositions have been widely used in the fields of automotive parts, home appliances, medical equipment parts, electric wires, sundries, and the like. The thermoplastic elastomer compositions have been heavily used particularly in the applications of automotive sealants and building material sealants.

Since automotive sealants have complex structures, it has been common to join molded bodies formed of a thermoplastic elastomer composition to one another in order to manufacture an intended composite molded body.

The inventor of the present invention proposed a joint technique for fusion-bonding molded bodies that are to be joined to each other by using a joint member composed of a thermoplastic elastomer composition without using an adhesive or the like, that is, a thermoplastic elastomer composition produced by mixing a styrene-butadiene nonhydrogenated block copolymer having a specific viscosity, a styrene-butadiene hydrogenated block copolymer, a hydrocarbon rubber softener, and a propylene resin with one another at a specific ratio and subsequently performing dynamic crosslinking (PTL 1).

As a technique for fusion-bonding molded bodies to each other, there has been proposed a method including profile extrusion-molding a thermoplastic elastomer composition that includes a specific hydrogenated block copolymer, a specific amorphous polyolefin polymer, a polypropylene resin, and a mineral oil rubber softener at predetermined proportions and thermal fusion-bonding the resulting molded bodies to each other (PTL 2). In PTL 2, the thermoplastic elastomer composition includes an amorphous polyolefin polymer in order to enhance a thermal fusion-bonding capability.

   PTL 1: JP 2019-131722 A
   PTL 2: JP H10-120865 A

Composite molded bodies used as a sealant included in window frames for automobiles or the like are required to have further high sliding performance in order to reduce noises and setting that occur as a result of closing and opening of the windows. It is known that adding a material having high smoothness to a composite molded body in order to enhance sliding performance degrades the fusion bonding capability and fusion bonding durability of the composite molded body used as a joint member. Thus, a technique that enables the sliding performance, the fusion bonding capability, and the fusion bonding durability to be achieved at high levels has been anticipated.

It is described that a joint member composed of the thermoplastic elastomer composition described in PTL 1 has a suitable capability of fusion bonding to a member to which the joint member is to be bonded, while certain sliding performance is maintained. However, when bending is performed at the interface between the joint member and the member to which the joint member is bonded, which is located in the fusion-bonded portion, detachment occurs easily at the above interface disadvantageously. Thus, there is room for improvement of fusion bonding durability of the portion at which the joint member and the member are fusion-bonded to each other.

The thermoplastic elastomer composition described in PTL 2 is considered not sufficient for the use in which all of the sliding performance, fusion bonding capability, and fusion bonding durability are required as a joint member.

Summary of Invention

An object of the present invention is to address the above issues of the related art and provide a thermoplastic elastomer composition with which a composite molded body excellent in terms of sliding performance, a fusion bonding capability, and fusion bonding durability can be formed and a composite molded body composed of the thermoplastic elastomer composition.

The inventor of the present invention found that a thermoplastic elastomer composition that includes a styrene elastomer, a specific propylene resin, and a silicone lubricant enables the production of a composite molded body excellent in terms of sliding performance, a fusion bonding capability, and fusion bonding durability and made the present invention.

The inventor of the present invention also found that a thermoplastic elastomer composition having a sea-island structure constituted by a styrene elastomer and a specific propylene resin, wherein a tear elongation measured by a specific method using the thermoplastic elastomer composition and a specific thermoplastic elastomer composition that includes a propylene resin as a sea phase is equal to or more than a predetermined value, also enables the production of a composite molded body excellent in terms of sliding performance, a fusion bonding capability, and fusion bonding durability.

The inventor of the present invention further found that a composite molded body that includes a joint member composed of a first thermoplastic elastomer composition having a sea-island structure that includes a sea phase that is a propylene resin including a crystalline polypropylene and an amorphous polypropylene and an island phase that is a styrene elastomer and present in the sea phase and a member to which the joint member is to be joined, the member being composed of a second thermoplastic elastomer composition including a thermoplastic elastomer including a propylene resin, is excellent in terms of sliding performance, a fusion bonding capability, and fusion bonding durability when a tear elongation measured by a specific method using the first and second thermoplastic elastomer compositions is equal to or more than a predetermined value.

Advantageous Effects of Invention

Specifically, the summary of the present invention is as follows.

[1] A thermoplastic elastomer composition comprising components (A), (B1), (B2), and (C) below.

> Component (A): styrene elastomer
> Component (B1): crystalline polypropylene
> Component (B2): amorphous polypropylene
> Component (C): silicone lubricant

[2] The thermoplastic elastomer composition according to [1], wherein a tear elongation measured by a method below is 230% or more.

<Method for Measuring Tear Elongation>

To an injection molding die provided with an insert that is an injection-molded sheet formed of a thermoplastic elastomer composition (Duro A hardness: 75 to 85, melting point: 133°C to 143°C) including a propylene resin as a sea phase, the thermoplastic elastomer composition according to [1] is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

[3] The thermoplastic elastomer composition according to [1] or [2], wherein a content of the component (B2) is 10% by mass or more and 30% by mass or less with a total content of the components (B1) and (B2) being 100% by mass.
[4] The thermoplastic elastomer composition according to any one of [1] to [3], wherein a ratio of a mass of the component (A) to a total mass of the components (B1) and (B2) is 1.00 or more and 1.30 or less.
[5] The thermoplastic elastomer composition according to any one of [1] to [4], wherein a compression set measured under conditions of 70°C, 22 hours, and 25% compression in accordance with JIS K6262 is 55% or less.
[6] The thermoplastic elastomer composition according to any one of [1] to [5], wherein a melt flow rate (MFR) of the component (B2), the melt flow rate being measured at a temperature of 230°C and a load of 21.2 N, is 1 to 10 g/10 min.
[7] The thermoplastic elastomer composition according to any one of [1] to [6], wherein an elongation at break measured in accordance with JIS K6251 is 950% or more.
[8] A joint member comprising the thermoplastic elastomer composition according to any one of [1] to [7].
[9] An automotive corner member comprising the joint member according to [8].
[10] A composite molded body comprising a joint member composed of a first thermoplastic elastomer composition and a member to which the joint member is to be joined, the member being composed of a second thermoplastic elastomer composition, wherein the first thermoplastic elastomer composition is the thermoplastic elastomer composition according to any one of [1] to [7].
[11] An automotive glass run channel comprising the composite molded body according to [8].
[12] A thermoplastic elastomer composition comprising a sea-island structure including a sea phase composed of a component (B): a propylene resin and an island phase composed of a component (A): a styrene elastomer and present in the sea phase, the thermoplastic elastomer composition having a tear elongation of 230% or more, the tear elongation being measured by a method below.

<Method for Measuring Tear Elongation>

To an injection molding die provided with an insert that is an injection-molded sheet formed of a thermoplastic elastomer composition (Duro A hardness: 75 to 85, melting point: 133°C to 143°C) including a propylene resin as a sea phase, the thermoplastic elastomer composition comprising the sea-island structure is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

[13] The thermoplastic elastomer composition according to [12], wherein the component (B) includes a component (B1): a crystalline polypropylene and a component (B2): an amorphous polypropylene.
[14] The thermoplastic elastomer composition according to [13], wherein a content of the component (B2) is 10% by mass or more and 30% by mass or less with a total content of the components (B1) and (B2) being 100% by mass.
[15] The thermoplastic elastomer composition according to [13] or [14], wherein a ratio of a mass of the component (A) to a total mass of the components (B1) and (B2) is 1.00 or more and 1.30 or less.
[16] The thermoplastic elastomer composition according to any one of [12] to [15], wherein a compression set measured under conditions of 70°C, 22 hours, and 25% compression in accordance with JIS K6262 is 55% or less.
[17] A composite molded body comprising a joint member composed of a first thermoplastic elastomer composition and a member to which the joint member is to be joined, the member being composed of a second thermoplastic elastomer composition, wherein:

the first thermoplastic elastomer composition is a thermoplastic elastomer composition having a sea-island structure including a sea phase composed of a component (B): a propylene resin and an island phase composed of a component (A): a styrene elastomer and present in the sea phase,
the second thermoplastic elastomer composition includes a thermoplastic elastomer including a propylene resin, and
a tear elongation measured using the first and second thermoplastic elastomer compositions by a method below is 230% or more.

<Method for Measuring Tear Elongation>

To an injection molding die provided with an insert that is an injection-molded sheet formed of the second thermoplastic elastomer composition, the first thermoplastic elastomer composition is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

[18] The composite molded body according to [17], wherein the component (B) includes a component (B1): a crystalline polypropylene and a component (B2): an amorphous polypropylene.
[19] The composite molded body according to [18], wherein a content of the component (B2) is 10% by mass or more and 30% by mass or less with a total content of the components (B1) and (B2) being 100% by mass.
[20] An automotive glass run channel comprising the composite molded body according to any one of [17] to [19].
Advantageous Effects of Invention

According to the present invention, a thermoplastic elastomer composition with which a composite molded body excellent in terms of sliding performance, a fusion bonding capability, and fusion bonding durability can be formed and a composite molded body composed of the thermoplastic elastomer composition can be provided.
The thermoplastic elastomer composition and composite molded body according to the present invention, which are excellent in terms of sliding performance, a fusion bonding capability, and fusion bonding durability, are useful as an automotive sealant or a building material sealant and are particularly useful as a composite molded body included in an automotive glass run channel or the like.

Brief Description of Drawings

[Fig. 1] Fig. 1 is a perspective view of an example of an automotive glass run channel to which the present invention is applied.

[Fig. 2] Fig. 2 is a front view of a dumb-bell test specimen for measuring tear elongation in accordance with JIS K6252 having an angle shape without a notch. Description of Embodiments

Details of the present invention are described below. The present invention is not limited by the following description. Various alternation and modification may be made without departing from the scope of the present invention.

Hereinafter, in the case where a range is expressed using two numerical or physical property values and "to" interposed therebetween, it is considered that the range includes the numerical or physical property values before and after "to".

<Thermoplastic Elastomer Composition>

The thermoplastic elastomer composition according to the present invention includes the components (A), (B1), (B2), and (C) below.

Component (A): styrene elastomer (hereinafter, may be referred to as "styrene elastomer (A)")
Component (B1): crystalline polypropylene (hereinafter, may be referred to as "crystalline polypropylene (B1)")
Component (B2): amorphous polypropylene (hereinafter, may be referred to as "amorphous polypropylene (B2)")
Component (C): silicone lubricant (hereinafter, may be referred to as "silicone lubricant (C)")

The thermoplastic elastomer composition according to the present invention is also a thermoplastic elastomer composition having a sea-island structure including a sea phase that is a component (B): a propylene resin (hereinafter, may be referred to as "propylene resin (B)") and an island phase that is a component (A): a styrene elastomer and present in the sea phase, wherein a tear elongation measured by the method described below is 230% or more.

Whether the thermoplastic elastomer composition has the sea-island structure as described above can be determined by the following method.

First, as a pretreatment, a material that is to be observed is buried in an epoxy resin. Subsequently, a slice is prepared with a diamond knife or the like. The slice is stained with osmium tetroxide or ruthenium tetroxide in a desiccator. The stained slice is observed with a transmission electron microscope. Since the sea and island portions of the sea-island structure can be distinguished from each other on the basis of shades caused due to the degree to which the resin is stained with osmium tetroxide, the presence or absence of the sea-island structure can be confirmed using the shades. A styrene elastomer is heavily (darkly) stained, while a propylene resin is lightly (brightly) stained.

[Method for Measuring Tear Elongation]

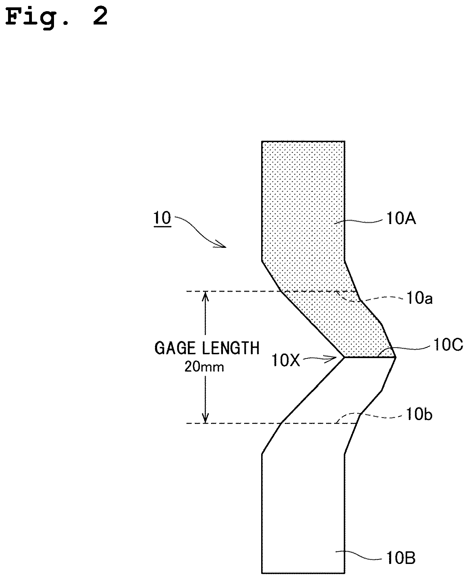

The method for measuring tear elongation in the present invention (hereinafter, may be referred to as "method for measuring tear elongation according to the present invention") is described with reference to Fig. 2.

Hereinafter, the thermoplastic elastomer composition according to the present invention which is used for measuring tear elongation may be referred to as "thermoplastic elastomer composition under test", and a thermoplastic elastomer composition that includes a propylene resin as a sea phase and is used as an opposite material for measuring tear elongation may be referred to as "thermoplastic elastomer composition for insert".

Specifically, the measurement of tear elongation according to the present invention is conducted by the steps (1) to (4) below.

(1) An injection-molding sheet having a thickness of 2 mm is formed using, as a thermoplastic elastomer composition for insert, a thermoplastic elastomer composition (Duro A hardness: 75 to 85, melting point: 133°C to 143°C) including a propylene resin as a sea phase. The injection-molded sheet is cut into a size of 10 cm × 5 cm to form an insert.

(2) The insert is charged into a mold of a 110-ton injection molding machine. The thermoplastic elastomer composition under test is injected into the mold at a cylinder temperature of 260°C and a mold temperature of 40°C. Hereby, a composite molded body that includes the insert and a molded sheet composed of the thermoplastic elastomer composition under test which are joined to each other at the thickness portions of the edges of the sheets is formed by insert molding.

(3) The JIS K6252 unnicked angle dumbbell-shaped specimen 10 illustrated in Fig. 2 is taken from the composite molded body by punching. The specimen 10 is a composite specimen that includes a portion 10A composed of the thermoplastic elastomer composition for insert which includes a propylene resin as a sea phase (in Fig. 2, the dotted portion), a portion 10B composed of the thermoplastic elastomer composition under test (in Fig. 2, the hollow portion), and a point 10X of origin of rupture which is present at the interface 10C at which the portions 10A and 10B are fusion-bonded.

This specimen 10 is arranged as illustrated in Fig. 2, that is, such that the portion 10A composed of the thermoplastic elastomer composition for insert is located at the upper part in the vertical direction and the portion 10B composed of the thermoplastic elastomer composition under test is located at the lower part in the vertical direction. The interface 10C of fusion bonding is considered as a center line. Reference lines 10a and 10b are drawn at the distances 10 mm above and below the center line in the vertical direction. The total of the distances, that is, 20 mm, is considered as a gage length.

(4) The portions 10A and 10B of the specimen 10 which are composed of the thermoplastic elastomer compositions are pulled in the directions in which the portions 10A and 10B become separated from the interface 10C of fusion bonding at a test temperature of 23°C and a cross head speed of 200 mm/min and a tear elongation is measured. In the measurement of the tear elongation, a tear strength can also be measured.

Specifically, the inventor of the present invention confirmed that, in the evaluation of fusion bonding durability, it is not possible to reproduce fusion bonding durability to a sufficient degree by conducting the evaluation using a specimen prepared using a JIS No. 3 dumbbell, which is used in a common tensile test. Accordingly, the inventor of the present invention conducted studies in order to evaluate fusion bonding durability with high reproducibility and confirmed that the fusion bonding durability of the thermoplastic elastomer composition constituting the joint member can be evaluated with high reproducibility by measuring a tear elongation using the specimen 10, which is prepared by forming, as described above, the portion susceptible to rupture at the interface of fusion bonding (in Fig. 2, the V-notch 10X at the interface 10C of fusion bonding) of a JIS K6252 unnicked angle dumbbell, which is commonly used in tear test of a single material.

The thermoplastic elastomer composition that includes a propylene resin as a sea phase (Duro A hardness: 75 to 85, melting point: 133°C to 143°C), which is used as a thermoplastic elastomer composition for insert, is not limited. As for a commercial product, "TREXPRENE (registered trademark) 3855N (dynamically crosslinked thermoplastic elastomer, Duro A hardness: 83, melting point: 138°C)" produced by Mitsubishi Chemical Corporation can be used.

A common approach to enhancing tear elongation is to increase the amount of the styrene elastomer (A), which is a rubber component. However, in such a case, the proportion of the propylene resin (B), which serves as a component responsible for fusion bonding, becomes relatively low and, consequently, the fusion bonding capability becomes degraded. The inventor of the present invention found that using the amorphous polypropylene (B2) in combination with the crystalline polypropylene (B1) enhances the tear elongation and enables intended fusion bonding durability to be achieved without imparting a fusion bonding capability.

[Mechanism]

Details of the reasons for which the thermoplastic elastomer composition according to the present invention produces the above-described advantageous effects are not clear but are presumably as follows.

The amorphous polypropylene (B2) included in the thermoplastic elastomer composition as a propylene resin (B) enhances the dispersibility of the styrene elastomer (A), which is a rubber component. This makes it possible to achieve tear ductility higher than that of common products and consequently reduces the force that acts on the portion (interface of fusion bonding) at which a joint member and a member to which the joint member is to be joined are fusion-bonded to each other. As a result, suitable fusion bonding durability can be achieved while sliding performance is enhanced.

[Styrene Elastomer (A)]

Publicly known styrene elastomers can be used as a styrene elastomer (A) included in the thermoplastic elastomer composition according to the present invention.

The styrene elastomer (A) is preferably, for example, a block copolymer that includes at least two polymer blocks composed primarily of a vinyl aromatic compound and at least one polymer block including butadiene and/or a hydrogenated product of the above block copolymer. Hereinafter, the block copolymer and/or a hydrogenated product thereof which serves as a component (A) may be referred to as "(hydrogenated) block copolymer".

Note that the expression "polymer block composed primarily of a vinyl aromatic compound" used herein refers to a polymer block produced by polymerizing monomers composed primarily of a vinyl aromatic compound. The expression "polymer block including butadiene" used herein refers to a polymer block produced by polymerizing monomers including butadiene. The expression "composed primarily of a vinyl aromatic compound" used herein means that the content of a vinyl aromatic compound is 50 mol% or more.

The vinyl aromatic compound included in the monomers constituting primarily the polymer block of the component (A) is preferably, but not limited to, styrene and/or a styrene derivative, such as $\alpha$-methylstyrene. It is particularly preferable that the compound is primarily styrene. The polymer block constituted primarily of the vinyl aromatic compound may include a monomer other than a vinyl aromatic compound as a raw material.

The polymer block of the component (A) including butadiene may include a monomer other than butadiene such as isoprene as a raw material.

The weight proportion of the polymer block constituted primarily of the vinyl aromatic compound in the polymer block of the component (A) is preferably, but not limited to, 5% by mass or more and is more preferably 10% by mass or more; and is preferably 55% by mass or less, is more preferably 50% by mass or less, and is further preferably 45% by mass or less.

The chemical structure of the polymer block of the component (A) may be any of linear, branched, radial, etc. The component (A) preferably has the structure represented by Formula (I) or (II) below. In order to increase mechanical strength, the structure represented by Formula (1) below is more preferable.

$$P\text{-}(Q\text{-}P)m \qquad (I)$$

$$(P\text{-}Q)n \qquad (II)$$

where P represents the polymer block constituted primarily of the vinyl aromatic compound, Q represents the polymer block including butadiene, m represents an integer of 1 to 5, and n represents an integer of 2 to 5.

When plurality of blocks P and plurality blocks Q are included, each compound unit thereof may be identical or differ from each other.

In formulae (I) and (II), m and n may be large numbers, which is suitable in terms of lowering an order-disorder transition temperature of a rubbery high polymer, or m and n may be small numbers, which is suitable in terms of ease of production and the cost of production.

From the standpoint of the rubber elasticity of the composition, it is preferable that the component (A) be a block copolymer represented by formula (I). The component (A) is more preferably a block copolymer represented by formula (I) in which m is 3 or less, even more preferably a block copolymer represented by formula (I) in which m is 2 or less, and most preferably a block copolymer represented by formula (I) in which m is 1.

The component (A) may be a hydrogenated product of the block copolymer including the blocks P and the block Q. In this instance, it is preferable that the component (A) be a hydrogenated product of a block copolymer represented by formula (I); the component (A) is more preferably a hydrogenated product of a block copolymer represented by formula (I) in which m is 3 or less, even more preferably a hydrogenated product of a block copolymer represented by formula (I) in which m is 2 or less, and most preferably a hydrogenated product of a block copolymer represented by formula (I) in which m is 1.

Examples of the (hydrogenated) block copolymer that includes at least two polymer blocks composed primarily of a vinyl aromatic compound and at least one polymer block including butadiene, which serves as a component (A), include a styrene-butadiene-styrene block copolymer and a hydrogenated product thereof and a styrene-isoprene-butadiene-styrene block copolymer and a hydrogenated product thereof.

Among these, a styrene-butadiene-styrene hydrogenated block copolymer is suitable in order to readily achieve the flowability required for achieving a capability of fusion bonding to olefin rubbers and olefin thermoplastic elastomers, which are used for forming a member to which the joint member is to be joined, when the thermoplastic elastomer composition is used for forming the joint member.

The weight-average molecular weight of the styrene elastomer (A) that serves as a component (A) is a value determined by gel permeation chromatography (hereinafter, may be abbreviated as "GPC") in terms of polystyrene. The weight-average molecular weight of the styrene elastomer (A) is preferably 200,000 or more, is more preferably 220,000 or more, and is further preferably 240,000 or more. The upper limit for the weight-average molecular weight of the styrene elastomer (A) is preferably 600,000 or less, is more preferably 580,000 or less, and is further preferably 560,000 or less. The above upper limit is particularly preferably 430,000 or less in consideration of fusion bonding strength.

When the weight-average molecular weight of the styrene elastomer (A) falls within the above range, a sufficient degree of compression set and suitable sliding performance can be both achieved simultaneously.

The method for producing the styrene elastomer (A) is not limited; any production method with which the above-described structure and physical properties can be achieved may be used. For example, the block copolymer can be produced by performing block polymerization using a lithium catalyst or the like in accordance with the method described in JP H7-97493A. The hydrogenation of the block copolymer can be performed by, for example, the method described in JP S59-133203A in an inert solvent in the presence of a hydrogenation catalyst.

Examples of commercial products of the styrene elastomer (A) include "TAIPOL(registered trademark)-6151" and "TAIPOL(registered trademark)-6159" produced by Taiwan Synthetic Rubber Corp. (TSRC); "G1651" and "G1633" produced by Kraton Polymers Japan Ltd.; and "Septon(registered trademark) 4099" produced by Kuraray Co., Ltd.

Only one styrene elastomer (A) may be used alone. Alternatively, two or more styrene elastomers (A) having different compositions and different physical properties may be used in combination.

[Propylene Resin (B)]

The propylene resin (B) included in the thermoplastic elastomer composition according to the present invention preferably includes a crystalline polypropylene (B1) and an amorphous polypropylene (B2). The crystalline polypropylene (B1) is a component that contributes primarily to injection moldability. The amorphous polypropylene (B2) is a component that primarily imparts a fusion bonding capability and fusion bonding durability to the thermoplastic elastomer composition.

The term "propylene resin" used in the present invention refers to a resin wherein the content of a propylene unit is 50% by mass or more. The propylene resin may be composed of only one resin component or a plurality of resin components.

The content of an ethylene unit in the crystalline polypropylene (B1) is less than 7% by mass of the total content of the monomer units constituting the crystalline polypropylene (B1). The upper limit for the content of the ethylene unit is preferably 6% by mass or less and is more preferably 5% by mass or less. The lower limit for the content of the ethylene unit in the crystalline polypropylene (B1) is preferably 1% by mass or more and is more preferably 2% by mass or more. The content of a propylene unit in the crystalline polypropylene (B1) is commonly 50% by mass or more, is preferably 60% to 99% by mass, and is more preferably 80% to 98% by mass of the total content of the monomer units constituting the crystalline polypropylene (B1).

The contents of the units constituting the crystalline polypropylene (B1) can be determined by infrared spectroscopy. The same applies to the amorphous polypropylene (B2) described below.

The melting peak temperature of the crystalline polypropylene (B1) is preferably 100°C or more and less than 157°C. The above melting peak temperature is preferably equal to or more than the above lower limit in consideration of heat resistance. The above melting peak temperature is preferably less than the above upper limit in consideration of compatibility with the styrene elastomer (A).

The melting peak temperatures of the crystalline polypropylene (B1) and the amorphous polypropylene (B2) described below can be measured by the following method in accordance with JIS K7121.
the following steps (1) to (3) are conducted with a differential scanning calorimeter (DSC6220 produced by SII NanoTechnology Inc.).

In each step, a melting curve is obtained by plotting time on the horizontal axis and the amount of heat of melting on the vertical axis. The top of the peak observed in the step (3) is considered a melting peak temperature.

Step (1): 5 mg of the sample is heated from room temperature at a rate of 100 °C/min from 40°C to 200°C. After the heating has been finished, holding is performed for 3 minutes.
Step (2): Cooling is performed from 200°C to 40°C at a rate of 10 °C/min. After the cooling has been finished, holding is performed for 3 minutes.
Step (3): Heating is performed from 40°C to 200°C at a rate of 10 °C/min.

As a crystalline polypropylene (B1), a propylene-ethylene copolymer is suitable. The propylene-ethylene copolymer is a copolymer that includes a propylene unit, an ethylene unit, and a constitutional unit other than the propylene or ethylene unit as needed. Specific examples of the constitutional unit other than the propylene or ethylene unit include α-olefin units other than propylene. Examples of the other α-olefin units include a 1-butene unit, a 1-pentene unit, a 1-hexene unit, a 1-heptene unit, a 1-octene unit, a 1-nonene unit, a 1-decene unit, a 1-undecene unit, a 1-dodecene unit, a 1-tridecene unit, a 1-tetradecene unit, a 1-pentadecene unit, a 1-hexadecene unit, a 1-heptadecene unit, a 1-octadecene unit, a 1-nonadecene unit, a 1-eicosene unit, a 3-methyl-1-butene unit, a 3-methyl-1-pentene unit, a 4-methyl-1-pentene unit, a 2-ethyl-1-hexene unit, and a 2,2,4-trimethyl-1-pentene unit. The crystalline polypropylene (B1) may include only one of the other constitutional units above. Alternatively, the crystalline polypropylene (B1) may include two or more of the other constitutional units above.

The melt flow rate (MFR) of the crystalline polypropylene (B1) which is measured at a temperature of 230°C and a load of 21.2 N by a method conforming to JIS K7210 is preferably 0.5 to 50 g/10 min. When the MFR of the crystalline polypropylene (B1) falls within the above range, moldability is likely to be enhanced.

The content of an ethylene unit in the amorphous polypropylene (B2) is 7% by mass or more and 50% by mass or less of the total content of the monomer units constituting the amorphous polypropylene (B2). The upper limit for the content of the ethylene unit is preferably 20% by mass or less and is more preferably 15% by mass or less. The lower limit for the content of the ethylene unit is preferably 8% by mass or more and is more preferably 10% by mass or more.

The content of a propylene unit in the amorphous polypropylene (B2) is commonly 50% by mass or more and 93% by mass or less of the total content of the monomer units constituting the amorphous polypropylene (B2). The upper limit for the content of the propylene unit in the amorphous polypropylene (B2) is preferably 92% by mass or less and is more preferably 90% by mass or less. The lower limit for the content of the propylene unit in the amorphous polypropylene (B2) is preferably 80% by mass or more and is more preferably 85% by mass or more. The content of the propylene unit in the amorphous polypropylene (B2) preferably falls within the above range because, in such a case, the melting peak temperature is likely to fall within the range described below.

The melting peak temperature of the amorphous polypropylene (B2) is preferably 45°C or more and 100°C or less. When the melting peak temperature of the amorphous polypropylene (B2) is equal to or less than the above upper limit, a capability of fusion bonding to a member to which the joint member is to be joined is readily imparted. From the above viewpoint, the melting peak temperature of the amorphous polypropylene (B2) is more preferably 90°C or less. The lower limit for the melting peak temperature of the amorphous polypropylene (B2) is preferably 45°C or more and is more preferably 55°C or more in consideration of heat resistance.

The amorphous propylene-ethylene copolymer used as an amorphous polypropylene (B2) may include a constitutional unit other than an ethylene or propylene unit and may include, for example, an $\alpha$-olefin unit other than propylene. Examples of the other $\alpha$-olefin unit include a 1-butene unit, a 1-pentene unit, a 1-hexene unit, a 1-heptene unit, a 1-octene unit, a 1-nonene unit, a 1-decene unit, a 1-undecene unit, a 1-dodecene unit, a 1-tridecene unit, a 1-tetradecene unit, a 1-pentadecene unit, a 1-hexadecene unit, a 1-heptadecene unit, a 1-octadecene unit, a 1-nonadecene unit, a 1-eicosene unit, a 3-methyl-1-butene unit, a 3-methyl-1-pentene unit, a 4-methyl-1-pentene unit, a 2-ethyl-1-hexene unit, and a 2,2,4-trimethyl-1-pentene unit. The amorphous polypropylene (B2) may include only one of the other constitutional units above. Alternatively, the amorphous polypropylene (B2) may include two or more of the other constitutional units above.

The melt flow rate (MFR) of the amorphous polypropylene (B2) which is measured at a temperature of 230°C and a load of 21.2 N in accordance with JIS K7210 is preferably 1 to 10 g/10 min. When the MFR of the amorphous polypropylene (B2) falls within the above range, it becomes easy to apply a strong shear force while the materials for the thermoplastic elastomer composition are melt-kneaded and, consequently, material dispersibility is likely to be enhanced.

As for the crystalline polypropylene (B1) and the amorphous polypropylene (B2), it is preferable that the content of the crystalline polypropylene (B1) be 70% by mass or more and 90% by mass or less and the content of the amorphous polypropylene (B2) be 10% by mass or more and 30% by mass or less with the total content of the crystalline polypropylene (B1) and the amorphous polypropylene (B2) being 100% by mass in order to maintain intended heat resistance while maintaining fusion bonding capability and fusion bonding durability. From the above viewpoint, it is more preferable that the content of the crystalline polypropylene (B1) be 75% by mass or more and 85% by mass or less and the content of the amorphous polypropylene (B2) be 15% by mass or more and 25% by mass or less with the total content of the crystalline polypropylene (B1) and the amorphous polypropylene (B2) being 100% by mass.

For producing the crystalline polypropylene (B1) and the amorphous polypropylene (B2), the polymerization methods known in the related art in which a known catalyst for polymerization of olefins is used may be used. Examples of such polymerization methods include a polymerization method in which a Ziegler-Natta catalyst is used. Examples of the above polymerization method include slurry polymerization, solution polymerization, bulk polymerization, and gas phase polymerization. The above polymerization methods may be used in combination of two or more.

The crystalline polypropylene (B1) and the amorphous polypropylene (B2) are also commercially available.

Examples of the commercial products that correspond to the crystalline polypropylene (B1) include "Prim Polypro (registered trademark)" produced by Prime Polymer Co., Ltd.; "Sumitomo Noblen (registered trademark)" produced by Sumitomo Chemical Co., Ltd.; "polypropylene block copolymer" produced by SunAllomer Ltd.; "NOVATEC (registered trademark) PP" produced by Japan Polypropylene Corporation; "Moplen (registered trademark)" produced by Lyondell-Basell; "ExxonMobil PP" produced by ExxonMobil; "Formolene (registered trademark)" produced by Formosa Plastics; "Borealis PP" produced by Borealis; "SEETEC PP" produced by LG Chemical; "ASI POLYPROPYLENE" produced by A.Schulman; "INEOS PP" produced by INEOS Olefins&Polymers; "Braskem PP" produced by Braskem; "Sumsung Total" produced by SAMSUNG TOTAL PETROCHEMICALS; "Sabic (registered trademark) PP" produced by Sabic; "TOTAL PETROCHEMICALS Polypropylene" produced by TOTAL PETROCHEMICALS; and "YUPLENE (registered trademark)" produced by SK. The crystalline polypropylene (B1) can be selected appropriately from the above commercial products.

Examples of the commercial products that correspond to the amorphous polypropylene (B2) and that are propylene-ethylene copolymers include "Prime TPO (registered trademark)" produced by Prime Polymer Co., Ltd.; "VERSIFY (registered trademark)" produced by The Dow Chemical Company; and "Vistamaxx (registered trademark)" produced by ExxonMobil Chemical Company. Examples of the above commercial products that are propylene-ethylene-1-butene copolymers include "TAFMER (registered trademark) XM" produced by Mitsui Chemicals, Inc. The amorphous polypropylene (B2) can be selected appropriately from the above commercial products.

For each of the crystalline polypropylene (B1) and amorphous polypropylene (B2) included in the propylene resin (B), two or more types of propylene resins having different compositions or physical properties may be used in combination.

The content of the propylene resin (B) (in the case where the components (B1) and (B2) are used as a propylene resin (B), the total content of the components (B1) and (B2)) in the thermoplastic elastomer composition according to the present invention is preferably 40 parts by mass or more and 120 parts by mass or less relative to 100 parts by mass of the styrene elastomer (A).

The lower limit for the content of the propylene resin (B) in the thermoplastic elastomer composition according to the present invention is preferably 40 parts by mass or more, is more preferably 50 parts by mass or more, and is further preferably 60 parts by mass or more relative to 100 parts by mass of the styrene elastomer (A) in consideration of moldability. The upper limit for the content of the propylene resin (B) in the thermoplastic elastomer composition according to the present invention is preferably 120 parts by mass or less, is more preferably 110 parts by mass or less, and is further preferably 100 parts by mass or less relative to 100 parts by mass of the styrene elastomer (A) in order to achieve certain hardness with which certain flexibility appropriate for molded articles can be achieved.

In the thermoplastic elastomer composition according to the present invention, the ratio of the mass of the styrene elastomer (A) to the mass of the propylene resin (B) (in the case where the components (B1) and (B2) are used as a propylene resin (B), the total mass of the components (B1) and (B2)) is preferably 1.00 or more and 1.30 or less. The above mass ratio is more preferably 1.10 or more and 1.27 or less. When the mass ratio between the styrene elastomer (A) and the propylene resin (B) falls within the above range, a suitable sea-island structure that includes a sea phase composed of the propylene resin (B) and an island phase that is composed of the styrene elastomer (A) and is present in the sea phase can be formed and both fusion bonding capability and compression set are readily achieved at high levels.

[Silicone Lubricant (C)]

Examples of the silicone lubricant (C) include a silicone oil, a silicone masterbatch, and a liquid siloxane wax. The amount of the silicone lubricant (C) used is preferably 0.5 to 50 parts by mass, is more preferably 1 to 25 parts by mass, is further preferably 1.4 to 13.9 parts by mass, and is particularly preferably 2.8 to 8.3 parts by mass relative to 100 parts by mass of the styrene elastomer component (A). When the content of the silicone lubricant (C) falls within the above range, excellent sliding performance can be achieved while the degradation of fusion bonding capability is limited.

The kinematic viscosity (25°C) of the silicone lubricant (C) is preferably 1 cSt or more, is more preferably 5 cSt or more, and is further preferably 10 cSt or more. The upper limit for the above kinematic viscosity is not limited. The higher the kinematic viscosity within the above range, the faster the sliding performance can be enhanced. The lower the kinematic viscosity within the above range, the slower the sliding performance can be enhanced.

Note that the above kinematic viscosity is a kinematic viscosity measured with a Ubbelohde viscometer at 25°C in accordance with ASTM D445-46T (or JIS Z8803).

The silicone lubricant (C) may be a commercial product. Specific examples thereof include "KF96-10CS", "KF96-100CS", "KF96-1000CS", and "KF96-5000CS" produced by Shin-Etsu Chemical Co., Ltd.

Only one silicone lubricant (C) may be used alone. Alternatively, two or more silicone lubricants (C) may be used in any combination at any ratio.

[Hydrocarbon Rubber Softener (D)]

The thermoplastic elastomer composition according to the present invention preferably includes a hydrocarbon rubber softener (D) (hereinafter, may be referred to as "component (D)") in order to enhance moldability.

The lower limit for the content of the hydrocarbon rubber softener (D) in the thermoplastic elastomer composition according to the present invention is commonly 70 parts by mass or more, is preferably 75 parts by mass or more, and is more preferably 80 parts by mass or more relative to 100 parts by mass of the styrene elastomer (A) in consideration of moldability. The upper limit for the content of the hydrocarbon rubber softener (D) in the thermoplastic elastomer composition according to the present invention is commonly 130 parts by mass or less, is preferably 125 parts by mass or less, and is more preferably 120 parts by mass or less relative to 100 parts by mass of the styrene elastomer (A) in consideration of flexibility.

The softening agent (D) for a hydrocarbon-based rubber may be a mineral-oil-based softening agent or a synthetic-resin-based softening agent. From a viewpoint of a high affinity for other components, a mineral-oil-based softening agent is more preferable. Typically, mineral-oil-based softening agents are mixtures of an aromatic hydrocarbon, a naphthenic hydrocarbon, and a paraffinic hydrocarbon. Oils in which 50% or more of all the carbon atoms are carbon atoms derived from a paraffinic hydrocarbon are referred to as paraffinic oils. Oils in which 30 to 45% of all the carbon atoms are carbon atoms derived from a naphthenic hydrocarbon are referred to as naphthenic oils. Oils in which 35% or more of all the carbon atoms are carbon atoms derived from an aromatic hydrocarbon are referred to as aromatic oils. Among these, paraffinic oils are preferable.

A kinematic viscosity at 40°C of the softening agent for a hydrocarbon-based rubber (D) is preferably greater than or equal to 20 centistokes (cSt) and more preferably greater than or equal to 50 cSt and is preferably less than or equal to 800 cSt and more preferably less than or equal to 600 cSt. A flash point (COC method) of the softening agent for a hydrocarbon-based rubber is preferably greater than or equal to 200°C and more preferably greater than or equal to 250°C.

The softening agent for a hydrocarbon-based rubber (D) is commercially available. Examples of the corresponding commercial products include "Nisseki Polybutene (registered trademark) HV" series produced by JX Nippon Oil & Energy Corporation; and "Diana (registered trademark) process oil PW" series produced by Idemitsu Kosan Co., Ltd. An appropriate item can be selected from the above commercial products.

Only one softening agent for a hydrocarbon-based rubber (D) may be used alone, or two or more softening agent for a hydrocarbon-based rubber (D) may be used in any combination at any ratio.

[Other Components]

In the production of the thermoplastic elastomer composition according to the present invention, a component other than the components (A) to (D) described above may be used as needed as a raw material such that the advantageous effects of the present invention are not impaired. Hereinafter, the "component (B)" includes both components (B1) and (B2).

Examples of the other component include a crosslinking agent; resins, such as thermoplastic resins and elastomers other than the component (A) or (B); and various types of additives, such as an antioxidant, a filler, a heat stabilizer, a photostabilizer, an ultraviolet absorber, a neutralizer, a lubricant other than the component (C), an antifogging agent, an antiblocking agent, a slip agent, a dispersing agent, a colorant, a flame retardant, an antistatic agent, a conductivity-imparting agent, a metal deactivator, a molecular weight modifier, an antimicrobial agent, an antifungal agent, an antibacterial agent, an antiviral agent, and a fluorescent brightening agent. Any of the above materials may be used alone or in combination of two or more.

Examples of the crosslinking agent include an organic peroxide, a phenolic resin, and crosslinking aids other than an organic peroxide or phenolic resin. The above crosslinking agents may be used alone or in combination of two or more.

The organic peroxide that can be used as a crosslinking agent may be either an aromatic or aliphatic organic peroxide. Specific examples thereof include dialkyl peroxides, such as di-t-butyl peroxide, t-butyl cumyl peroxide, dicumyl peroxide, 2,5-dimethyl-2,5-di(t-butylperoxy)hexane, 2,5-dimethyl-2,5-di(t-butylperoxy)-3-hexyne, 1,3-bis(t-butylperoxyisopropyl)benzene, and 1,1-di(t-butylperoxy)-3,3,5-trimethylcyclohexane; peroxy esters, such as t-butyl peroxybenzoate, t-butylperoxy isopropyl carbonate, 2,5-dimethyl-2,5-di(benzoylperoxy)hexane, and 2,5-dimethyl-2,5-di(benzoylperoxy)-3-hexyne; and hydroperoxides, such as acetyl peroxide, lauroyl peroxide, benzoyl peroxide, p-chlorobenzoyl peroxide, and 2,4-dichlorobenzoyl peroxide. Among these, 2,5-dimethyl-2,5-di(t-butylperoxy)hexane is preferable. The above organic peroxides may be used alone or in combination of two or more.

Examples of the phenolic resin that can be used as a crosslinking agent include an alkyl phenol formaldehyde and an alkyl phenol formaldehyde bromide. The above phenolic resins may be used alone or in combination of two or more.

Examples of the crosslinking aids other than an organic peroxide or phenolic resin include crosslinking aids for peroxides, such as sulfur, p-quinone dioxime, p-dinitrosobenzene, and 1,3-diphenylguanidine; crosslinking aids for phenolic resins, such as anhydrous tin chloride, tin chloride dihydrate, and ferric chloride; polyfunctional vinyl compounds, such as divinylbenzene, triallyl cyanurate, triallyl isocyanurate, and diallyl phthalate; and polyfunctional (meth)acrylates, such as ethylene glycol di(meth)acrylate, diethylene glycol di(meth)acrylate, polyethylene glycol di(meth)acrylate, trimethylolpropane tri(meth)acrylate, and allyl (meth)acrylate. The above crosslinking aids may be used alone or in combination of two or more.

The amount of the crosslinking aids used is preferably 0.5 parts by mass or more, is more preferably 1.0 parts by mass or more, and is further preferably 1.5 parts by mass or more relative to 100 parts by mass of the amount of the styrene-based elastomer (A) in order to conduct the crosslinking reaction to a sufficient degree. The amount of the crosslinking aids used is preferably 10.0 parts by mass or less, is more preferably 9.0 parts by mass or less, and is further preferably 8.0 parts by mass or less relative to 100 parts by mass of the amount of the styrene-based elastomer (A) in order to control the crosslinking reaction.

Examples of the thermoplastic resins other than the component (A) and component (B) include polyphenylene ether resins; polyamide resins, such as nylon 6 and nylon 66; polyester resins, such as polyethylene terephthalate and polybutylene terephthalate; polyoxymethylene resins, such as a polyoxymethylene homopolymer and a polyoxymethylene copolymer; and polymethyl methacrylate resins and polyolefin resins (except those that correspond to the component (B)).

Examples of the elastomers other than the component (A) and component (B) include polyester elastomers; and polybutadiene.

In the case where the thermoplastic elastomer composition according to a preferable aspect of the present invention includes a resin other than the component (A), (B1), or (B2), the content of the other resin is preferably 10 parts by mass or less, is more preferably 5 parts by mass or less, and is further preferably 3 parts by mass or less relative to 100 parts by mass of the total content of the components (A) to (C) in order to achieve the advantageous effects produced by using the components (A) to (C) at a sufficient level.

Examples of the antioxidant (E) (hereinafter, may be referred to as "component (E)") include phenolic antioxidants, phosphite antioxidants, and thioether antioxidants. In the case where the antioxidant (E) is used, the amount of the antioxidant (E) used is commonly 0.01 to 3.0 parts by mass and is preferably 0.15 to 0.6 parts by mass relative to 100 parts by mass of the amount of the styrene-based elastomer (A). When the content of the antioxidant (E) falls within the above range, suitable thermal stability can be achieved.

Examples of the filler include glass fibers, hollow glass balls, carbon fibers, talc, calcium carbonate, mica, potassium titanate fibers, silica, metal soap, titanium dioxide, and carbon black. In the case where the filler is used, the amount of the filler used is commonly 0.3 to 100 parts by mass relative to 100 parts by mass of the amount of the styrene-based elastomer (A).

[Method for Producing Thermoplastic Elastomer Composition]

The thermoplastic elastomer composition according to the present invention is preferably produced by melt-kneading a composition that includes the styrene elastomer (A), the propylene resin (B) (in the case where the components (B1) and (B2) are used as a propylene resin (B), the components (B1) and (B2)), the silicone lubricant (C), the hydrocarbon rubber softener (D), the other component, etc. in predetermined amounts.

In the present invention, examples of a mixer kneader used for melt kneading include a closed Banbury mixer, a mixing roller, a kneader, and a twin-screw extruder. Among these, a twin-screw extruder is preferably used. A production method according to a preferable aspect in which a twin-screw extruder is used include performing a melt kneading treatment while feeding the above components to raw material feed ports (hoppers) of a twin-screw extruder having plural raw material feed ports.

The temperature at which the melt kneading treatment is performed is commonly 80°C to 300°C and is preferably 100°C to 250°C. The amount of time during which the dynamic heat treatment is performed is commonly 0.1 to 30 minutes.

In the case where the thermoplastic elastomer composition according to the present invention is produced by performing the dynamic heat treatment with a twin-screw extruder, the radius (R (mm)) of the barrel of the twin-screw extruder, the rotation speed (N (rpm)) of the screw, and the discharge rate (W (kg/hr)) preferably satisfy the relationship represented by Formula (i) below and more preferably satisfy the relationship represented by Formula (ii) below while extrusion is performed.

$$2.6 < NW/R^3 < 22.6 \qquad (i)$$

$$3.0 < NW/R^3 < 20.0 \qquad (ii)$$

The above relationship among the radius (R (mm)) of the barrel of the twin-screw extruder, the rotation speed (N (rpm)) of the screw, and the discharge rate (W (kg/hr)) is preferably more than the above lower limit in order to produce the thermoplastic elastomer composition with efficiency. The above relationship is preferably less than the above upper limit in order to reduce the amount of heat generated as a result of shearing and the formation of foreign matter that causes poor appearance.

[Physical Properties of Thermoplastic Elastomer Composition]

The thermoplastic elastomer composition according to the present invention is preferably a thermoplastic elastomer composition having a sea-island structure that includes a sea phase composed of the propylene resin (B) and an island phase that is composed of the styrene elastomer (A) and present in the sea phase, wherein a tear elongation measured by the method for measuring tear elongation according to the present invention, which is described above, is commonly 230% or more. Since the above tear elongation is 230% or more, the fusion bonding capability and the fusion bonding durability can be enhanced.

In consideration of the fusion bonding durability, the tear elongation of the thermoplastic elastomer composition according to the present invention is preferably 250% or more. The upper limit for the above tear elongation is not limited and is commonly 400% or less.

The tear strength of the thermoplastic elastomer composition according to the present invention which is measured when the tear elongation is measured in accordance with the method for measuring tear elongation according to the present invention is preferably 40 N/mm or more and is more preferably 50 N/mm or more. When the above tear strength is 30 N/mm or more, it is considered that the thermoplastic elastomer composition can be used as a sealant included in window frames for automobiles or the like. The upper limit for the above tear strength is not limited and is commonly 60 N/mm or less.

The compression set of the thermoplastic elastomer composition according to the present invention which is measured in accordance with JIS K 6262 under the conditions of 70°C, 22 hours, and 25% compression is preferably 55% or less. When the compression set of the thermoplastic elastomer composition according to the present invention at 70°C is 55% or less, sufficient durability to a compressed state can be achieved even in the case where the thermoplastic elastomer composition according to the present invention is used for producing automotive sealants, building material sealants, or the like, which are repeatedly brought into a compressed state as a result of closing and opening of a window frame, a door frame, or the like.

The melt flow rate (MFR) of the thermoplastic elastomer composition according to the present invention which is measured by a method conforming to JIS K 7210 at a temperature of 230°C and a load of 21.2 N is preferably 0.5 g/10min or more, is more preferably 0.7 g/10min or more, and is further preferably 0.9 g/10min or more in consideration of moldability. The melt flow rate (MFR) of the thermoplastic elastomer composition according to the present invention is preferably 80 g/10min or less, is more preferably 75 g/10min or less, and is further preferably 70 g/10min or less in consideration of moldability.

The density of the thermoplastic elastomer composition according to the present invention which is measured by a method conforming to Method A of ISO 1183 (Immersion Method) is preferably 0.95 g/cm$^3$ or less in consideration of weight reduction. The above density is more preferably 0.93 g/cm$^3$ or less and is further preferably 0.91 g/cm$^3$ or less. The lower limit for the above density is commonly 0.90 g/cm$^3$ or more in consideration of the density of the polypropylene resin used as a component (C).

The lower limit for the tensile stress of the thermoplastic elastomer composition according to the present invention at break which is measured in accordance with the measuring method described in JIS K 6251 is preferably 19.0 MPa or more and is more preferably 20.0 MPa or more in order to achieve adequate fittability to base materials in the case where the thermoplastic elastomer composition is used as a joint member. The upper limit for the tensile stress of the thermoplastic elastomer composition at break is preferably 29.0 MPa or less and is more preferably 28.0 MPa or less in order to prevent a joint member fit to a base material from detaching from the base material.

From the same viewpoint as above, the elongation of the thermoplastic elastomer composition at break which is measured in accordance with the measuring method described in JIS K 6251 is preferably 950% or more and is more preferably 1000% or more. The upper limit for the elongation of the thermoplastic elastomer composition at break is preferably 13000 or less and is more preferably 1200% or less in order to prevent a joint member fit to a base material from detaching from the base material.

[Molded Body and Applications]

The thermoplastic elastomer composition according to the present invention can be formed into a molded body by a molding method commonly used for thermoplastic elastomer compositions, such as injection molding, extrusion molding, hollow molding, or compression molding. Among these, injection molding is suitably used for molding the thermoplastic elastomer composition according to the present invention. Optionally, subsequent to the above molding, the molded body may be subjected to a secondary working, such as lamination molding or thermoforming.

A molded body formed by molding the thermoplastic elastomer composition according to the present invention can be applied to a variety of fields described below: automotive parts, such as a skin, weatherstripping, a headliner material, an interior sheet, a bumper molding, a side molding, an air spoiler, an air duct hose, and a sealant; civil engineering and construction material parts, such as a water stop, a joint sealer, a window frame, and a sealant; sporting goods, such as a golf grip and a tennis racket grip; industrial parts, such as a hose tube and a gasket; home appliance parts, such as a hose and a packing; medical parts, such as a medical container, a gasket, and a packing; food parts, such as a container and a packing; medical equipment parts; electric wires; sundries; and the like.

Among these, a molded body produced by molding the thermoplastic elastomer composition according to the present invention is suitably used particularly as an automotive sealant or a building material sealant and is suitably used as an automotive sealant and, specifically, an automotive glass run channel.

<Joint Member and Composite Molded Body>

A joint member can be produced by melt-kneading the thermoplastic elastomer composition according to the present invention and preferably injection-molding the kneaded material.

A composite molded body according to the present invention is a composite molded body constituted by a joint member composed of a first thermoplastic elastomer composition that is the thermoplastic elastomer composition according to the present invention and a member to which the joint member is to be joined, the member being composed of a second thermoplastic elastomer composition. This composite molded body is commonly produced by melt-kneading the thermoplastic elastomer composition according to the present invention and injection-molding the kneaded material to the member to which the joint member is to be joined, the member being composed of the second thermoplastic elastomer composition, such as an extrusion-molded member.

The composite molded body according to the present invention is a composite molded body including a joint member composed of a first thermoplastic elastomer composition and a member to which the joint member is to be joined, the member being composed of a second thermoplastic elastomer composition, wherein the first thermoplastic elastomer composition is a thermoplastic elastomer composition having a sea-island structure including a sea phase composed of the propylene resin (B) and an island phase composed of the styrene elastomer (A) and present in the sea phase, the second thermoplastic elastomer composition includes a thermoplastic elastomer including a propylene resin, and a tear elongation measured by the above-described method for measuring tear elongation according to the present invention using the first thermoplastic elastomer composition as a thermoplastic elastomer composition under test and the second thermoplastic elastomer composition as a thermoplastic elastomer composition for insert is 230% or more.

In the composite molded body, it is preferable that the propylene resin (B) include the crystalline polypropylene (B1) and the amorphous polypropylene (B2) and the content of the crystalline polypropylene (B1) be 70% by mass or more and 90% by mass or less and the content of the amorphous polypropylene (B2) be 10% by mass or more and 30% by mass or less with the total content of the crystalline polypropylene (B1) and the amorphous polypropylene (B2) being 100% by mass in order to achieve intended heat resistance while maintaining fusion bonding capability and fusion bonding durability. From the above viewpoint, it is more preferable that the content of the crystalline polypropylene (B1) be 75% by mass or more 85% by mass or less and the content of the amorphous polypropylene (B2) be 15% by mass or more and 25% by mass or less with the total content of the crystalline polypropylene (B1) and the amorphous polypropylene (B2) being 100% by mass.

The member to which the joint member is to be joined, which constitutes the composite molded body according to the present invention, is preferably composed of an olefin rubber. Specific examples of the olefin rubber include an olefin thermoplastic elastomer and a sulfur-vulcanized rubber. It is preferable to use a thermoplastic elastomer composition that includes a propylene resin as a sea phase in order to achieve a suitable fusion bonding capability.

The thermoplastic elastomer composition that includes a propylene resin as a sea phase, which constitutes the member to which the joint member is to be joined, preferably has a Duro A hardness of 75 to 85 and a melting point of 133°C to 143°C.

The thermoplastic elastomer that constitutes the member to which the joint member is to be joined is preferably an olefin thermoplastic elastomer or a styrene thermoplastic elastomer in order to achieve excellent capability of fusion bonding to the thermoplastic elastomer composition according to the present invention and markedly high mechanical strength and excellent compression set (setting resistance) appropriate for frames of automotive glass run channels. In particular, an olefin dynamically crosslinked thermoplastic elastomer is preferable.

The olefin dynamically crosslinked thermoplastic elastomer composition that includes a propylene resin as a sea phase is commercially available. Examples of the corresponding commercial products include "TREXPRENE (registered trademark)" produced by Mitsubishi Chemical Corporation. A corresponding commercial product can be selected appropriately from the above commercial products.

In particular, the composite molded body according to the present invention is suitably used as an automotive composite molded body, such as an automotive glass run channel.

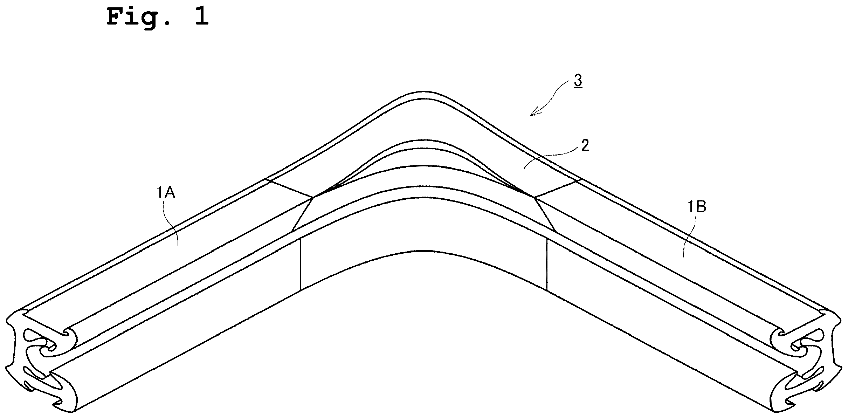

Fig. 1 is a perspective view of an example of the automotive glass run channel, which is a composite molded body 3. The composite molded body 3 includes extrusion-molded members to be bonded 1A and 1B that have been formed by extrusion-molding a thermoplastic elastomer composition, which constitute linear portions, and a corner portion which is a joint member 2 according to the present invention and with which the extrusion-molded members 1A and 1B are fusion-bonded to each other to form a single body.

The above-described composite molded body 3 can be produced by, for example, inserting joint-side edges of the extrusion-molded members to be bonded 1A and 1B into a mold for injection molding and injection-molding the thermoplastic elastomer composition according to the present invention into the mold in order to form the joint member 2 that serves as a corner portion while merging the end surfaces of the extrusion-molded members 1A and 1B with the joint member 2 by fusion bonding.

EXAMPLES

The contents of the present invention are described more specifically with reference to Examples below. The present invention is not limited by Examples below without departing from the scope of the present invention. Note that the values described in the description of the production conditions and evaluation results in Examples below mean the upper and lower limits preferable in an aspect of the present invention. A preferable range may be defined by a combination of the upper or lower limit and a value described in Examples below or a combination of values described in Examples below.

(Raw Materials)

The raw materials used in Examples and Comparative examples below are as follows.

[Styrene-Based Elastomer (A)]

<A-1>

Styrene-butadiene-styrene hydrogenated block copolymer (having the structure represented by Formula (I) above, styrene (block P) content: 32 mass%, weight-average molecular weight: 260,000)/"TAIPOL-6151" produced by Taiwan Synthetic Rubber Corp. (TSRC)

[Propylene Resin (B)]

<Crystalline Propylene Resin (BI)>

<B1-1>

Propylene-ethylene copolymer (MFR (JIS K7210): 1.3 g/10min (230°C, 21.2N), melting peak temperature: 149°C, propylene unit content: 97 mass%, ethylene unit content: 3 mass%)/"NOVATEC (registered trademark) PP EG7F" produced by Japan Polypropylene Corporation

<Amorphous Propylene Resin (B2) >

<B2-1>

Propylene-ethylene copolymer (MFR (JIS K7210): 8 g/10min (230°C, 21.2N), melting peak temperature: 75°C, propylene unit content: 91 mass%, ethylene unit content: 9 mass%)/"Vistamaxx (registered trademark) 3980FL" produced by ExxonMobil Chemical Company

<B2-2>

Propylene-ethylene copolymer (MFR (JIS K7210): 2 g/10min (230°C, 21.2N), melting peak temperature: 75°C, propylene unit content: 89 mass%, ethylene unit content: 11 mass%)/"Vistamaxx (registered trademark) 3020FL" produced by ExxonMobil Chemical Company

[Silicone Lubricant (C)]

<C-1>

Silicone oil/"KF96-1000CS" produced by Shin-Etsu Chemical Co., Ltd.

[Softening Agent For A Hydrocarbon-Based Rubber (D)]

<D-1>

Paraffinic rubber softener (kinematic viscosity at 40°C: 95.5 cSt, flash point: 272°C)/"Diana (registered trademark) process oil PW90" produced by Idemitsu Kosan Co., Ltd.

[Antioxidant (E)]

<E-1>

Phenolic antioxidant/"Irganox (registered trademark) 1010" produced by BASF Japan Ltd.

[Evaluation methods]

Each of the thermoplastic elastomer compositions prepared in Examples and Comparative examples was evaluated by the following methods.

In the measurements (1) to (5) below, a sheet (width: 120 mm, length: 80 mm, and thickness: 2 mm) prepared by injection-molding a specific one of the thermoplastic elastomer compositions with an in-line screw injection molding machine ("IS130" produced by Toshiba Machine Co., Ltd.) at an injection pressure of 50 MPa, a cylinder temperature of 220°C, and a mold temperature of 40°C was used.

(1) Duro A Hardness: The hardness observed 15 seconds after an indenter had been pressed against the specimen was measured in accordance with JIS K 6253(JIS-A).

The Duro A hardness is preferably 35 to 95 and is particularly preferably 40 to 98 as a sealing member for an auto mobile.

(2) Tensile Stress at Break: Tensile stress at break was measured in accordance with the method for measuring tensile stress at break which is described in JIS K 6251, as an index of the strength of the thermoplastic elastomer composition. The higher the tensile stress at break, the superior tensile properties required by thermoplastic elastomer composition were evaluated.

(3) Elongation at Break: Elongation at break was measured in accordance with the method for measuring elongation at break which is described in JIS K 6251, as an index of the strength of the thermoplastic elastomer composition. The higher the elongation at break, the superior tensile properties required by the thermoplastic elastomer composition were evaluated.

(4) Compression Set: Measurement was conducted under the conditions of 70°C, 22 hours, and 25% compression in accordance with JIS K 6262.

The lower the compression set of the sample, the better the estimation of endurance of the sample.

(5) Coefficients of Static Friction and Kinetic Friction

In the measurement of the coefficients of static friction and kinetic friction, the sheet (width: 120 mm, length: 80 mm, and thickness: 2 mm) prepared by injection molding was cut into a size of 60 cm × 45 cm × and, on the resulting test piece, a 200-gram weight bonded to a glass plate (length: 110 mm × width: 110 mm × thickness: 3 mm) with a double-faced adhesive tape was moved 6 cm. The measurement of the coefficients of static friction and kinetic friction was conducted three times, and the averages thereof were calculated.

The lower the coefficients of static friction and kinetic friction, the superior sliding performance required by the thermoplastic elastomer composition was evaluated.

(6) Strength and Elongation of Fusion Bonding to Thermoplastic Elastomer Composition That Includes Propylene Resin as Sea Phase

An injection-molded sheet that was formed of a thermoplastic elastomer composition including a propylene resin as a sea phase ("TREXPRENE (registered trademark) 3855N" produced by Mitsubishi Chemical Corporation, dynamically crosslinked thermoplastic elastomer) and had a thickness of 2 mm was cut into a piece having a size of 10 cm × 5 cm. The piece was charged into a mold of a 110-ton injection molding machine. A specific one of the thermoplastic elastomer compositions was injected into the mold at a cylinder temperature of 210°C and a mold temperature of 40°C. A composite molded body was formed by insert molding. The composite molded body was punched with a JIS No. 3 dumbbell and then pulled at a cross head speed of 200 mm/min at 23°C to measure fusion bonding strength and fusion bonding elongation.

It is considered that, the higher the fusion bonding strength and fusion bonding elongation, the higher the fusion bonding capability required by the joint member.

(7) Strength and Elongation of Tear from Thermoplastic Elastomer Composition That Includes Propylene Resin as Sea Phase

An injection-molded sheet that was formed of a thermoplastic elastomer composition including a propylene resin as a sea phase ("TREXPRENE (registered trademark) 3855N" produced by Mitsubishi Chemical Corporation, dynamically crosslinked thermoplastic elastomer) and had a thickness of 2 mm was cut into a piece having a size of 10 cm × 5 cm. The piece was charged into a mold of a 110-ton injection molding machine. A specific one of the thermoplastic elastomer compositions was injected into the mold at a cylinder temperature of 260°C and a mold temperature of 40°C. A composite molded body was formed by insert molding. A specimen was taken from the composite molded body by punching with a JIS K6252 unnicked angle dumbbell. As illustrated in Fig. 2, reference lines 10a and 10b were drawn at the positions 10 mm from the interface 10C of fusion bonding. The total of the distances, that is, 20 mm, was considered as a gage length. Subsequently, a tensile force was applied to the specimen at 23°C and a cross head speed of 200 mm/min in order to measure tear strength and tear elongation.

Tear elongation was evaluated in accordance with the following standards.

◎: Tear elongation was 250% or more
○: Tear elongation was 230% or more and less than 250%
×: Tear elongation was less than 230%

Although fusion bonding durability was evaluated using an injection-molded sheet in the above-described evaluation, the fusion bonding durability of a composite molded body as illustrated in Fig. 1 can also be evaluated with high reproducibility on the basis of the above evaluation results compared with the fusion bonding strength and fusion bonding elongation determined in (6) above.

[Examples and Comparative Examples]

<Example 1>

In a Henschel mixer, 100 parts by mass of (A-1), 69 parts by mass of (B1-1), 14 parts by mass of (B2-1), 5.6 parts by mass of (C-1), 94 parts by mass of (D-1), and 0.28 parts by mass of (E-1) were mixed with one another for 1 minute to form a mixture. This mixture was charged into feed ports of a co-rotating twin-screw extruder ("TEX30$\alpha$" produced by The Japan Steel Works, Ltd., L/D = 46, number of cylinder blocks: 13) at a rate of 15 kg/h in total. The temperature was increased to 110°C to 220°C and melt-kneading was performed. Then, pellets were formed. Hereby, a thermoplastic elastomer composition was prepared.

Using a transmission electron microscope, it was confirmed that the thermoplastic elastomer composition had a sea-island structure including the component (B) as a sea phase and the component (A) as an island phase.

The melt flow rate (MFR) of the thermoplastic elastomer composition was measured at a temperature of 230°C and a load of 21.2 N by a method conforming to JIS K7210.

The density of the thermoplastic elastomer composition was measured in accordance with Method A of ISO 1183 (Immersion Method).

The thermoplastic elastomer composition was evaluated in terms of the items (1) to (7) above.

Table-1 lists the evaluation results.

<Examples 2 to 5 and Comparative Examples 1>

Pellets of a thermoplastic elastomer composition were prepared as in Example 1, except that the formulation of the thermoplastic elastomer composition was changed as described in Table-1. The thermoplastic elastomer composition was evaluated as in Example 1. Table-1 lists the results.

In Table-1, "(B2) content" refers to the content of the amorphous polypropylene (B2) with the total content of the crystalline polypropylene (B1) and the amorphous polypropylene (B2) being 100% by mass.

[Table 1]

| | | | Unit | Example | | | | | Comparative example |
|---|---|---|---|---|---|---|---|---|---|
| | | | | 1 | 2 | 3 | 4 | 5 | 1 |
| Formulation | Component (A) | A-1 | Mass part | 100 | 100 | 100 | 100 | 100 | 100 |
| | Component (B) | B1-1 | Mass part | 69 | 71 | 66 | 85 | 85 | 83 |
| | | B2-1 | Mass part | 14 | 13 | 13 | 15 | 0 | 0 |
| | | B2-2 | Mass part | 0 | 0 | 0 | 0 | 15 | 0 |
| | Component (C) | C-1 | Mass part | 5.6 | 5.3 | 5.3 | 6.1 | 6.1 | 5.6 |
| | Component (D) | D-1 | Mass part | 94 | 79 | 84 | 103 | 103 | 94 |
| | Component (E) | E-1 | Mass part | 0.28 | 0.26 | 0.26 | 0.30 | 0.30 | 0.28 |
| | (B2) content | | Mass% | 17 | 16 | 17 | 15 | 15 | 0 |
| | Component (A)/(B) | | Mass ratio | 1.20 | 1.19 | 1.27 | 1.00 | 1.00 | 1.20 |
| Structure | Sea-island structure | | | Yes | Yes | Yes | Yes | Yes | Yes |
| Physical property results | MFR (230°C×21.2 N) | | g/10 min | 1.6 | 0.8 | 0.7 | 2.1 | 1.9 | 1.0 |
| | Density (immersion method) | | g/cm$^3$ | 0.9 | 0.9 | 0.9 | 0.9 | 0.9 | 0.9 |
| | Hardness (Duro A) | | - | 82 | 85 | 83 | 84 | 85 | 84 |
| | Tensile stress at break | | MPa | 22.1 | 25.0 | 24.4 | 19.1 | 20.9 | 21.5 |
| | Elongation at break | | % | 1013 | 1014 | 1026 | 999 | 1034 | 994 |
| | Coefficient of kinetic friction | | - | 2.12 | 2.09 | 1.91 | 2.02 | 1.93 | 2.01 |
| | Coefficient of static friction | | - | 4.41 | 4.40 | 4.30 | 4.23 | 3.99 | 4.11 |
| | Fusion bonding strength | | MPa | 3.5 | 3.7 | 3.5 | 3.8 | 4.0 | 3.7 |
| | Fusion bonding elongation | | % | 80 | 90 | 85 | 85 | 130 | 80 |
| | Tear elongation | | % | 295 | 255 | 267 | 243 | 337 | 220 |
| | | | Grade | ◎ | ◎ | ◎ | ○ | ◎ | × |
| | Tear strength | | N/mm | 50 | 55 | 52 | 53 | 55 | 53 |
| | Compression set | | % | 53 | 52 | 52 | 55 | 54 | 51 |

<Evaluation Results>

As described in Table-1, in Examples 1 to 5, excellent results were obtained in terms of sliding performance, fusion bonding capability, and fusion bonding durability.

In Comparative Example 1, where the amorphous polypropylene (B2) was not used, although fusion bonding strength and fusion bonding elongation did not greatly differ from those measured in Examples, tear elongation was small and fusion bonding durability was poor.

Although the present invention has been described in detail with reference to specific embodiments, it is apparent to a person skilled in the art that various alterations and modifications can be made therein without departing from the spirit and scope of the present invention.

The present application is based on Japanese Patent Application No. 2020-158729 filed on September 23, 2020, which is incorporated herein by reference in their entirety.

Industrial Applicability

The thermoplastic elastomer composition according to the present invention can be used in a variety of fields described below: automotive parts, such as a skin, weatherstripping, a headliner material, an interior sheet, a bumper molding, a side molding, an air spoiler, an air duct hose, and a sealant; civil engineering and construction material parts, such as a water stop, a joint sealer, a window frame, and a sealant; sporting goods, such as a golf grip and a tennis racket grip; industrial parts, such as a hose tube and a gasket; home appliance parts, such as a hose and a packing; medical parts, such as a medical container, a gasket, and a packing; food parts, such as a container and a packing; medical equipment parts; electric wires; sundries; and the like. Among these, the thermoplastic elastomer composition according to the present invention is suitably used particularly as an automotive sealant or a building material sealant and is suitably used as an automotive sealant and, specifically, an automotive glass run channel. Reference Signs List

> 1A, 1B EXTRUSION-MOLDED MEMBER
> 2 JOINT MEMBER
> 3 COMPOSITE MOLDED BODY
> 10 DUMB-BELL TEST SPECIMEN FOR MEASURING TEAR ELONGATION IN ACCORDANCE WITH JIS K6252 HAVING AN ANGLE SHAPE WITHOUT A NOTCH.

**Claims**

1. A thermoplastic elastomer composition comprising components (A), (B1), (B2), and (C) below.

   > Component (A): styrene elastomer
   > Component (B1): crystalline polypropylene
   > Component (B2): amorphous polypropylene
   > Component (C): silicone lubricant

2. The thermoplastic elastomer composition according to Claim 1, wherein a tear elongation measured by a method below is 230% or more.
   <Method for Measuring Tear Elongation>
   To an injection molding die provided with an insert that is an injection-molded sheet formed of a thermoplastic elastomer composition (Duro A hardness: 75 to 85, melting point: 133°C to 143°C) including a propylene resin as a sea phase, the thermoplastic elastomer composition according to Claim 1 is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

3. The thermoplastic elastomer composition according to Claim 1 or 2, wherein a content of the component (B2) is 10% by mass or more and 30% by mass or less with a total content of the components (B1) and (B2) being 100% by mass.

4. The thermoplastic elastomer composition according to any one of []1 to 3, wherein a ratio of a mass of the component (A) to a total mass of the components (B1) and (B2) is 1.00 or more and 1.30 or less.

5. The thermoplastic elastomer composition according to any one of []1 to 4, wherein a compression set measured under conditions of 70°C, 22 hours, and 25% compression in accordance with JIS K6262 is 55% or less.

6. The thermoplastic elastomer composition according to any one of []1 to 5, wherein a melt flow rate (MFR) of the component (B2), the melt flow rate being measured at a temperature of 230°C and a load of 21.2 N, is 1 to 10 g/10 min.

7. The thermoplastic elastomer composition according to any one of []1 to 6, wherein an elongation at break measured in accordance with JIS K6251 is 950% or more.

8. A joint member comprising the thermoplastic elastomer composition according to any one of []1 to 7.

9. An automotive corner member comprising the joint member according to Claim 8.

10. A composite molded body comprising a joint member composed of a first thermoplastic elastomer composition and a member to which the joint member is to be joined, the member being composed of a second thermoplastic elastomer composition, wherein the first thermoplastic elastomer composition is the thermoplastic elastomer composition according to any one of []1 to 7.

11. An automotive glass run channel comprising the composite molded body according to Claim 10.

12. A thermoplastic elastomer composition comprising a sea-island structure including a sea phase composed of a component (B): a propylene resin and an island phase composed of a component (A): a styrene elastomer and present in the sea phase, the thermoplastic elastomer composition having a tear elongation of 230% or more, the tear elongation being measured by a method below.
<Method for Measuring Tear Elongation>
To an injection molding die provided with an insert that is an injection-molded sheet formed of a thermoplastic elastomer composition (Duro A hardness: 75 to 85, melting point: 133°C to 143°C) including a propylene resin as a sea phase, the thermoplastic elastomer composition comprising the sea-island structure is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

13. The thermoplastic elastomer composition according to Claim 12, wherein the component (B) includes a component (B1): a crystalline polypropylene and a component (B2): an amorphous polypropylene.

14. The thermoplastic elastomer composition according to Claim 13, wherein a content of the component (B2) is 10% by mass or more and 30% by mass or less with a total content of the components (B1) and (B2) being 100% by mass.

15. The thermoplastic elastomer composition according to Claim 13 or 14, wherein a ratio of a mass of the component (A) to a total mass of the components (B1) and (B2) is 1.00 or more and 1.30 or less.

16. The thermoplastic elastomer composition according to any one of []12 to 15, wherein a compression set measured under conditions of 70°C, 22 hours, and 25% compression in accordance with JIS K6262 is 55% or less.

17. A composite molded body comprising a joint member composed of a first thermoplastic elastomer composition and a member to which the joint member is to be joined, the member being composed of a second thermoplastic elastomer composition, wherein:
the first thermoplastic elastomer composition is a thermoplastic elastomer composition having a sea-island structure including a sea phase composed of a component (B): a propylene resin and an island phase composed of a component (A): a styrene elastomer and present in the sea phase,

the second thermoplastic elastomer composition includes a thermoplastic elastomer including a propylene resin, and
a tear elongation measured using the first and second thermoplastic elastomer compositions by a method below is 230% or more.
<Method for Measuring Tear Elongation>
To an injection molding die provided with an insert that is an injection-molded sheet formed of the second thermoplastic elastomer composition, the first thermoplastic elastomer composition is injection-molded at 260°C to form a composite molded body. A JIS K6252 unnicked angle dumbbell-shaped specimen is taken from the composite molded body by punching. A tear elongation of the specimen is measured at a test temperature of 23°C, a cross head speed of 200 mm/min, and a gage length of 20 mm.

**18.** The composite molded body according to Claim 17,
wherein the component (B) includes a component (B1): a crystalline polypropylene and a component (B2): an amorphous polypropylene.

**19.** The composite molded body according to Claim 18,
wherein a content of the component (B2) is 10% by mass or more and 30% by mass or less with a total content of the components (B1) and (B2) being 100% by mass.

**20.** An automotive glass run channel comprising the composite molded body according to any one of []17 to 19.

Fig. 1

# Fig. 2

| | INTERNATIONAL SEARCH REPORT | | International application No. |
|---|---|---|---|
| | | | PCT/JP2021/028921 |

**A. CLASSIFICATION OF SUBJECT MATTER**
C08L 23/14(2006.01)i; C08L 25/08(2006.01)i; C08L 53/00(2006.01)i
FI: C08L53/00; C08L23/14; C08L25/08
According to International Patent Classification (IPC) or to both national classification and IPC

**B. FIELDS SEARCHED**

Minimum documentation searched (classification system followed by classification symbols)
C08L23/14; C08L25/08; C08L53/00

Documentation searched other than minimum documentation to the extent that such documents are included in the fields searched
Published examined utility model applications of Japan            1922–1996
Published unexamined utility model applications of Japan          1971–2021
Registered utility model specifications of Japan                 1996–2021
Published registered utility model applications of Japan         1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | US 2005/0038186 A1 (JSR CORP.) 17 February 2005 (2005-02-17) paragraphs [0048], [0049], examples | 1, 3, 5, 8-11<br>2, 4, 6, 7,<br>12-20 |
| A | JP 9-31270 A (JAPAN SYNTHETIC RUBBER CO., LTD.) 04 February 1997 (1997-02-04) entire text | 1-20 |
| A | JP 9-94926 A (MITSUI SEKIYU KAGAKU KOGYO KABUSHIKI KAISHA) 08 April 1997 (1997-04-08) entire text | 1-20 |
| A | WO 2009/110562 A1 (JSR CORPORATION) 11 September 2009 (2009-09-11) entire text | 1-20 |
| A | JP 2009-235309 A (JSR CORPORATION) 15 October 2009 (2009-10-15) entire text all drawings | 1-20 |
| A | JP 2019-131722 A (MCPP INNOVATION LLC) 08 August 2019 (2019-08-08) entire text all drawings | 1-20 |

☒  Further documents are listed in the continuation of Box C.  ☒  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 September 2021 (03.09.2021) | 14 September 2021 (14.09.2021) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| PCT/JP2021/028921 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2020-55981 A (MCPP INNOVATION LLC) 09 April 2020 (2020-04-09) entire text all drawings | 1-20 |

Form PCT/ISA/210 (continuation of second sheet) (January 2015)

**INTERNATIONAL SEARCH REPORT**

Information on patent family members

International application No.

PCT/JP2021/028921

| Patent Documents referred in the Report | Publication Date | Patent Family | Publication Date |
|---|---|---|---|
| US 2005/0038186 A1 | 17 Feb. 2005 | JP 2003-89732 A<br>JP 2003-171511 A<br>EP 1441005 A1<br>CN 1555395 A<br>KR 10-2004-0039369 A | |
| JP 9-31270 A | 04 Feb. 1997 | (Family: none) | |
| JP 9-94926 A | 08 Apr. 1997 | (Family: none) | |
| WO 2009/110562 A1 | 11 Sep. 2009 | US 2011/0046290 A1<br>entire text<br>CN 101959953 A | |
| JP 2009-235309 A | 15 Oct. 2009 | (Family: none) | |
| JP 2019-131722 A | 08 Aug. 2019 | (Family: none) | |
| JP 2020-55981 A | 09 Apr. 2020 | (Family: none) | |

Form PCT/ISA/210 (patent family annex) (January 2015)

**EP 4 219 619 A1**

**Patent documents cited in the description**

- JP 2019131722 A
- JP H10120865 A
- JP H797493 A
- JP 59133203 A
- JP 2020158729 A